(19) **Europäisches Patentamt**
**European Patent Office**
**Office européen des brevets**

(11) **EP 2 872 741 B1**

(12) **EUROPEAN PATENT SPECIFICATION**

(45) Date of publication and mention
of the grant of the patent:
**13.03.2019 Bulletin 2019/11**

(21) Application number: **13817013.9**

(22) Date of filing: **02.07.2013**

(51) Int Cl.:
**E21B 49/00** *(2006.01)* **G02B 21/00** *(2006.01)*
**G06T 17/00** *(2006.01)*

(86) International application number:
**PCT/US2013/049113**

(87) International publication number:
**WO 2014/011448 (16.01.2014 Gazette 2014/03)**

(54) **DIGITAL ROCK ANALYSIS SYSTEMS AND METHODS WITH RELIABLE MULTIPHASE PERMEABILITY DETERMINATION**

DIGITALE GESTEINSANALYSESYSTEME UND -VERFAHREN MIT ZUVERLÄSSIGER MEHRPHASIGER PERMEABILITÄTSBESTIMMUNG

SYSTÈMES ET PROCÉDÉS D'ANALYSE ROCHEUSE NUMÉRIQUE POSSÉDANT UNE DÉTERMINATION DE PERMÉABILITÉ POLYPHASIQUE FIABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2012 US 201213549354**

(43) Date of publication of application:
**20.05.2015 Bulletin 2015/21**

(73) Proprietor: **Halliburton Energy Services, Inc.**
**Houston, TX 77032 (US)**

(72) Inventors:
• **DE PRISCO, Giuseppe**
**Houstonm, TX 77007 (US)**

• **TOELKE, Jonas**
**Houston, TX 77019 (US)**

(74) Representative: **McWilliams, David John**
**Withers & Rogers LLP**
**4 More London Riverside**
**London SE1 2AU (GB)**

(56) References cited:
**WO-A2-2013/188239      US-A1- 2009 288 880**
**US-A1- 2010 128 932      US-A1- 2010 135 536**
**US-A1- 2011 004 447      US-A1- 2012 179 436**
**US-B1- 6 516 080**

EP 2 872 741 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

CROSS-REFERENCE TO RELATED APPLICATIONS

This application claims priority to Non-Provisional U.S. Application Ser. No. 13/524,758, titled "Digital Rock Analysis Systems and Methods with Multiphase Flow REV Determination" and filed June 15, 2012 by Giuseppe De Prisco and Jonas Toelke.

BACKGROUND

Microscopy offers scientists and engineers a way to gain a better understanding of the materials with which they work. Under high magnification, it becomes evident that many materials (including rock and bone) have a porous microstructure that permits fluid flows. Such fluid flows are often of great interest, e.g., in subterranean hydrocarbon reservoirs. The possibility of characterizing materials in terms of porosity, permeability, and saturation is well known, but such characterizations inevitably fail at a scale where the material is too anisotropic and/or heterogeneous to be characterized as a homogeneous medium.

Naturally, it is of interest to know the size at which a sample of the material becomes representative of the whole. The smallest volume over which a given measurement can be made that yields a value representative of larger volumes is termed a representative elementary volume ("REV"). Note that the REV depends on the selected measurement.

A number of references purport to determine the REV, but suffer from one or more shortcomings including subjectivity, error, over-estimation, overly-generous search regions, overly-restrictive subvolume positioning, inability to cope with sample heterogeneity, and inapplicability of the selected measurement to the intended use of the REV (e.g., multiphase fluid flow simulation). In this sense, US2011004447 discloses a method for characterizing a three-dimensional (3D) sample of porous media. In particular, a method using at least one measuring tool that retrieves two or more set of transmitted measured data at two or more depths of the sample, such that the retrieved two or more set of transmitted measured data is communicated to a processor and computed in at least one multi-point statistical (MPS) model so as to characterize the three-dimensional (3D) sample of porous media. The method disclosed is suitable for characterizing a three-dimensional (3D) sample of porous media using at least one measuring tool that retrieves two or more set of transmitted measured data at two or more depths of the sample, such that the retrieved two or more set of transmitted measured data is communicated to a processor and computed in at least one multi-point statistical (MPS) model. The method comprising: (a) retrieving a first and a second set of transmitted measured data from the two or more set of transmitted measured data wherein the second set of transmitted measured data can be retrieved adjacent to the first set of transmitted measured data and at a depth different than the first set of transmitted measured data; (b) using at least one noise-reduction algorithm to identify noise data in the retrieved first and second transmitted measured data so that the identified noise data can be removed, wherein the at least one noise-reduction algorithm includes a median-filtering algorithm; (c) using the two or more transmitted measured data to create a training image and to produce a 3D sample imaging log that is communicated to the processor, and inputting the training image in the at least one MPS model; (d) performing the pattern-based simulations from the training image using a voxel-based template that is applied to the training image; and (e) constructing the at least one MPS model from the pattern-based simulations from the training image so as to build one or more complete-3D-sampling model of the sample. Patent US6516080B1 was granted for a method of estimating physical properties of three-dimensional porous media. More particularly, it relates to estimating physical properties of rock, bone, soils, ceramics, granular media, and other composites . The method described in US6516080B1 is based on numerical modeling and the rock supposed to be statistically homogeneous and showing isotropy; under the assumption of homogeneous and isotropic media, the representative elementary volume can be the same as representative elementary area.

US2012179436 describes a computerized simulation of hydrocarbon reservoirs, and in particular to simulation of fluid flow in a complex heterogeneous subterranean reservoir where multiple interacting formation phenomena may be present, such as multimodal porosity or multi-scale fracture networks with spatially variable fluid transmissibilities. This document discloses a scalable parallel simulation system for simulating the general multiphase multicomponent fluid flow in a subterranean porous medium which is characterized as a multi-continuum (multi-porosity multi-permeability, or MPMP). The multi-continuum medium can have multi-modal matrix porosities as well as multi-scale interconnect fracture networks. With the present invention, a partitioning of the pore spaces into a multi-porosity system, each with a distinct set of rock and rock-fluid interaction properties, is performed.

Provided the above cited references purport to determine the REV, yet suffer from one or more shortcomings including subjectivity, error, over-estimation, overly-generous search regions, overly-restrictive subvolume positioning, inability to cope with sample heterogeneity, and inapplicability of the selected measurement to the intended use of the REV (e.g., multiphase fluid flow simulation).

In this sense, document WO2013188239 from the same applicant as the current application, provides a digital rock analysis systems and methods with multiphase flow representative elementary volume ("REV") determination. In order to perform said analysis the method thereby disclosed comprises deriving from a pore-matrix model at least one pore structure parameter; determining a distribution of multiple phases within pores of the pore-matrix model; based on said distribution, partitioning the pore-matrix model into multiple phase-matrix models; deriving said at least one pore structure parameter from each of the phase-matrix models; and producing a representation of the at least one pore structure parameter's dependence on said distribution.

BRIEF DESCRIPTION OF THE DRAWINGS

Accordingly, there are disclosed herein digital rock analysis systems and methods with multiphase flow representative elementary volume ("REV") determination. In the drawings:

Fig. 1 shows an illustrative high resolution focused ion beam and scanning electron microscope.

Fig. 2 shows an illustrative high performance computing network.

Fig. 3 shows an illustrative volumetric representation of a sample.

Fig. 4 shows an illustrative coordinate system for performing sample analysis.

Figs. 5A-5B show illustrative sample parameter distributions.

Figs. 6A-6D illustrate a phase-based partitioning of porosity.

Fig. 7 is a flowchart of an illustrative analysis method.

Figs. 8A-8B show the parameter distribution changes as a function of saturation for phase-partitioned porosities for a first illustrative sample.

Figs. 9A-9B show the parameter distribution changes as a function of saturation for phase-partitioned porosities for a second illustrative sample.

It should be understood, however, that the specific embodiments given in the drawings and detailed description below do not limit the disclosure. On the contrary, they provide the foundation for one of ordinary skill to discern the alternative forms, equivalents, and other modifications that are encompassed in the scope of the appended claims.

DETAILED DESCRIPTION

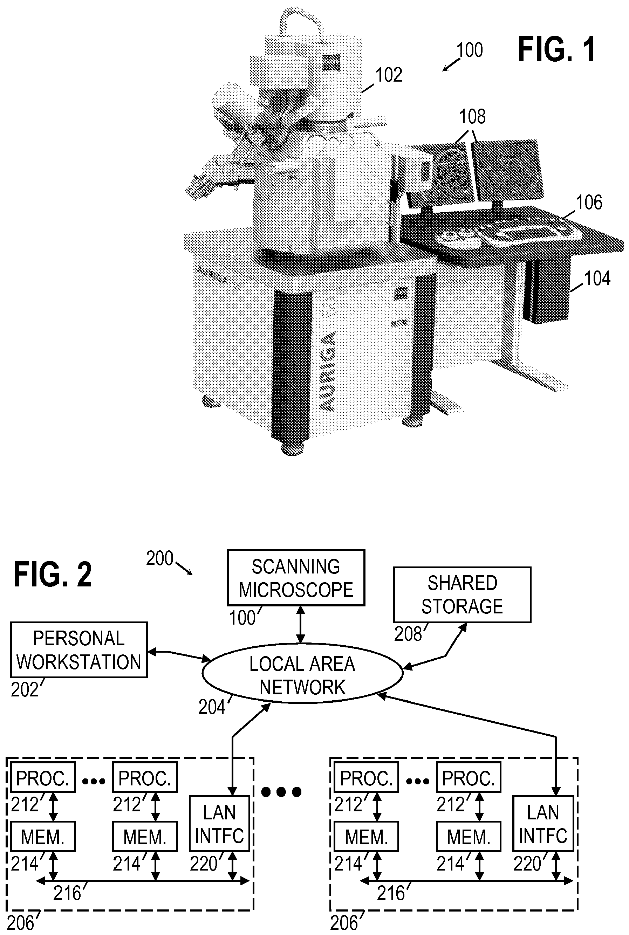

For context, Fig. 1 provides an illustration of a high-resolution focused ion beam and scanning electron microscope 100 having an observation chamber 102 in which a sample of material is placed. A computer 104 is coupled to the observation chamber instrumentation to control the measurement process. Software on the computer 104 interacts with a user via a user interface having one or more input devices 106 (such as a keyboard, mouse, joystick, light pen, touchpad, or touchscreen) and one or more output devices 108 (such as a display or printer).

For high resolution imaging, the observation chamber 102 is typically evacuated of air and other gases. A beam of electrons or ions can be rastered across the sample's surface to obtain a high resolution image. Moreover, the ion beam energy can be increased to mill away thin layers of the sample, thereby enabling sample images to be taken at multiple depths. When stacked, these images offer a three-dimensional image of the sample to be acquired. As an illustrative example of the possibilities, some systems enable such imaging of a 40x40x40 micrometer cube at a 10 nanometer resolution.

The system described above is only one example of the technologies available for imaging a sample. Regardless of how the images are acquired, the following disclosure applies so long as the resolution is sufficient to reveal the porosity structure of the sample.

Fig. 2 is an example of a larger system 200 within which the scanning microscope 100 can be employed. In the larger system 200, a personal workstation 202 is coupled to the scanning microscope 100 by a local area network (LAN) 204. The LAN 204 further enables intercommunication between the scanning microscope 100, personal workstation 202, one or more high performance computing platforms 206, and one or more shared storage devices 208 (such as a RAID, NAS, SAN, or the like). The high performance computing platform 206 generally employs multiple processors 212 each coupled to a local memory 214. An internal bus 216 provides high bandwidth communication between the multiple processors (via the local memories) and a network interface 220. Parallel processing software resident in the memories 214 enables the multiple processors to cooperatively break down and execute the tasks to be performed in an expedited fashion, accessing the shared storage device 208 as needed to deliver results and/or to obtain the input data and intermediate results.

Typically, a user would employ a personal workstation 202 (such as a desktop or laptop computer) to interact with the larger system 200. Software in the memory of the personal workstation 202 causes its one or more processors to interact with the user via a user interface, enabling the user to, e.g., craft and execute software for processing the images acquired by the scanning microscope. For tasks having small computational demands, the software may be executed on the personal workstation 202, whereas computationally demanding tasks may be preferentially run on the high performance computing platform 206.

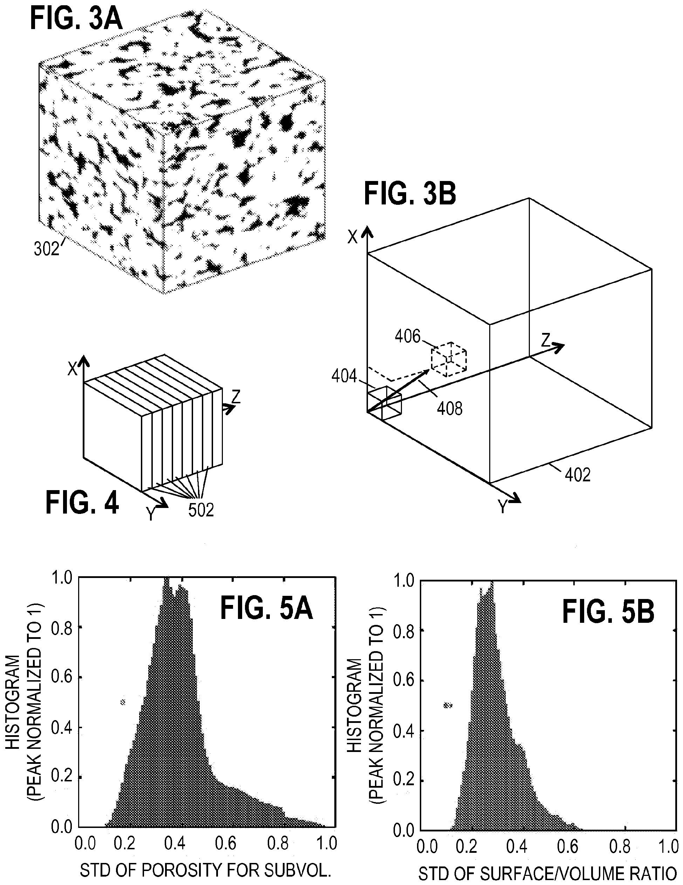

Fig. 3 is an illustrative image 302 that might be acquired by the scanning microscope 100. This three-dimensional image is made up of three-dimensional volume elements ("voxels") each having a value indicative of the composition of the sample at that point.

Fig. 4 provides a coordinate system for a data volume 402, with the x-, y-, and z-axes intersecting at one corner of the volume. Within the data volume, a subvolume 404 is defined. The illustrated subvolume 404 is a cube having sides of length *a*, but other subvolume shapes may alternatively be used, e.g., a parallelogram having the same shape as the overall data volume, a sphere, or a tetrahedron. It is desirable, though not necessary, for the chosen subvolume shape to be scalable via a characteristic dimension such as diameter or length of a side. The subvolume 404 can be defined at any position 406 within the data volume 402 using a displacement vector 408 from the origin to a fixed point on the subvolume. Similarly, sub-subvolumes can be defined and positioned within each subvolume.

One way to characterize the porosity structure of a sample is to determine an overall parameter value, e.g., porosity. The image is processed to categorize each voxel as representing a pore or a portion of the matrix, thereby obtaining a pore-matrix model in which each voxel is represented by a single bit. The total porosity of the sample can then be determined with a straightforward counting procedure. However, the resulting number reveals little about the structure, heterogeneity and isotropy of the sample. Accordingly, a more sophisticated measure may be preferred.

Fig. 5A shows a histogram of the standard deviation of subvolume porosity (or surface/volume or any other quantity that can be computed in a slice of the subvolume) in an illustrative carbonate rock sample, as calculated along a specific direction (the flow direction). The standard deviation is evaluated with respect to the average porosity (or surface/volume or other global quantity) of the whole data volume. Note that the distribution is a function of the length scale *l* used to define the subvolume. For each possible position of a subvolume of length scale *l* within the data volume, a standard deviation of a quantity that can be computed in a transverse slice is evaluated along the specific direction. In other words, one standard deviation calculation indicates the variation of a specific subvolume's porosity (or other quantity that can be computed in a slice) with respect to the averaged porosity of the whole volume in the given flow direction, normalized by the average porosity for the whole volume. The calculation of standard deviation is repeated for each possible position of the subvolume within the whole volume, yielding a set of standard deviations that are going to build the distribution of the standard deviations of the specific quantity that can be computed in a slice for the specific length scale of the subvolume and fixed direction. The set of standard deviations for subvolume porosity is plotted in a histogram in Fig. 5A, indicating a fairly consistent degree of heterogeneity with a gradual tail on the high side.

If this operation is repeated for different subvolume length scales, different histograms will be obtained, so that a statistical function of the length scale can be obtained. The moments of the distribution (mean, variance, kurtosis and skewness) can be evaluated to check at which length scale the distribution stabilizes (i.e., the statistic converges). The REV can be defined in terms of the length scale value where convergence is reached. Often when convergence is reached, the distribution moments approach those of a Gaussian distribution (and the histogram looks Gaussian).

Fig. 5B shows a similar histogram for the standard deviation of the subvolume surface/volume ratio. This ratio provides an indication regarding the size of the pores, and the standard deviation histogram indicates a dominant, consistent mode of heterogeneity with a suggestion of a second, smaller heterogeneity mode on the higher end.

As explained in U.S. Provisional Application 61/618,265 titled "An efficient method for selecting representative elementary volume in digital representations of porous media" and filed March 30, 2012 by inventors Giuseppe De Prisco and Jonas Toelke (and continuing applications thereof), either or both of these measures can be employed to determine whether reduced-size portions of the original data volume adequately represent the whole for porosity- and permeability-related analyses.

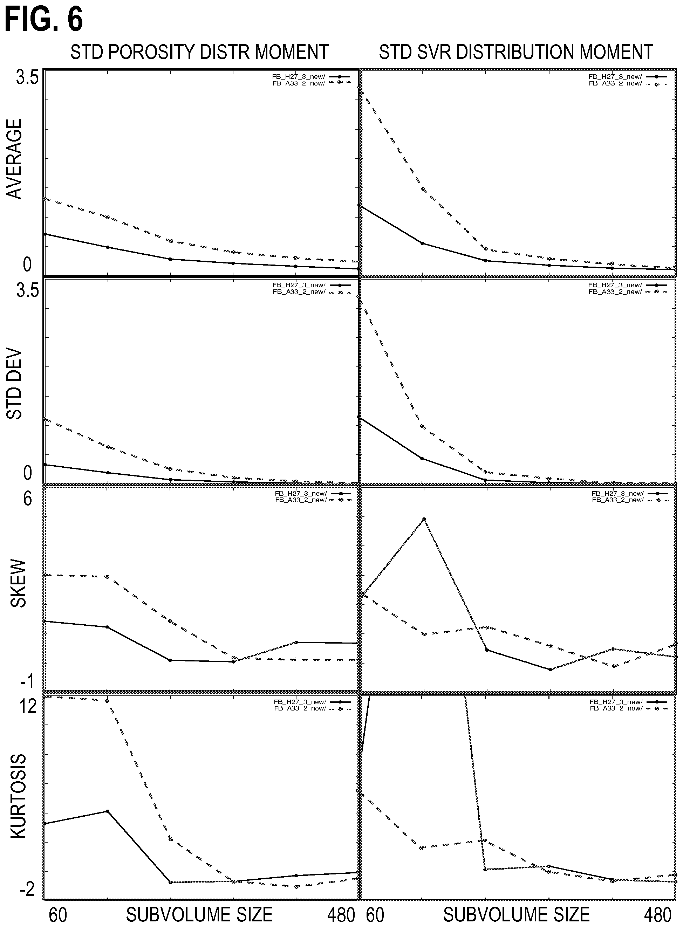

A potential difficulty arises, however, in analyses concerning multiple fluid phases effectively occupying different parts of the pore space. To understand why this is so, please consider Figs. 6A-6D. Fig. 6A shows an illustrative sample image having pore space between circularly shaped grains of matrix material. Taking the white pore space as being filled with a wetting fluid phase (e.g., water), consider invasion by a second, non-wetting phase (e.g., oil). In accordance with Laplace's equation, a positive capillary pressure produces a spherical interface having a curvature radius that shrinks with increased pressure, yielding a pressure-related degree of invasion into the pores.

Fig. 6B shows the sample of Fig. 6A with the addition of an invading (non-wetting) fluid phase shown as black. It can be seen that the pore space has been partitioned. Fig. 6C shows the pore space filled by the non-wetting phase (in black) while Fig. 6D shows the pore space filled by the wetting phase (in black). The pore-matrix model is thus partitioned into two phase-based pore-matrix models, hereafter termed phase-matrix models. This process can be readily extended, with an additional pore-matrix model obtained for each additional (non-mixing) phase. More information on an illustrative partitioning process can be found in Hilpert and Miller, "Pore-morphology-based simulation of drainage in totally wetting porous media", Advances in Water Resources 24 (2001) 243-255.

The partitioning is a function of the manner (injection, drainage, invasion), history, and degree of simulated fluid movement. In one illustrative implementation, spheres of gradually decreasing diameter, that here represent a perfect non-wetting fluid having negligible viscous coupling with other phases, are used to invade the pore space from one or more edges of the data model. The gradually decreasing diameter enables the invading fluid to reach more of the pore space, depending on the size and connectivity. In other implementations, connectivity may not be required, and fluid invasion permitted anywhere the requisite spheres will fit, the sphere diameters gradually increasing to yield less and less of the pore space to be occupied by the non-wetting fluid.

At each step (i.e., each sphere diameter), the corresponding phase-matrix models are determined and subject to separate analyses. For example, each pore-matrix model may be subject to a separate determination of porosity, permeability, surface-to-volume ratio, histogram of standard deviation of porosity, histogram of standard deviation of surface-to-volume ratio, and/or characteristic dimension of an REV. For example, an absolute permeability $k_{p,s}^{abs}$ can be computed from each phase-matrix model, where p is the phase (e.g., wetting or non-wetting) and s is the saturation of that phase as measured at the current invasion step in the original pore-matrix model. See, e.g., Papatzacos "Cellular Automation Model for Fluid Flow in Porous Media", Complex Systems 3 (1989) 383-405. From the computed absolute permeability values, we can obtain a (quasi static) relative permeability $k_{p,s}^{rel} = k_{p,s}^{abs} / k^{abs}$, where the denominator is the absolute permeability $k^{abs}$ of the original pore-matrix model. This calculation assumes a strong uniform wettability and negligible viscous coupling between the two phases, i.e., it represents the quasi-static relative permeability.

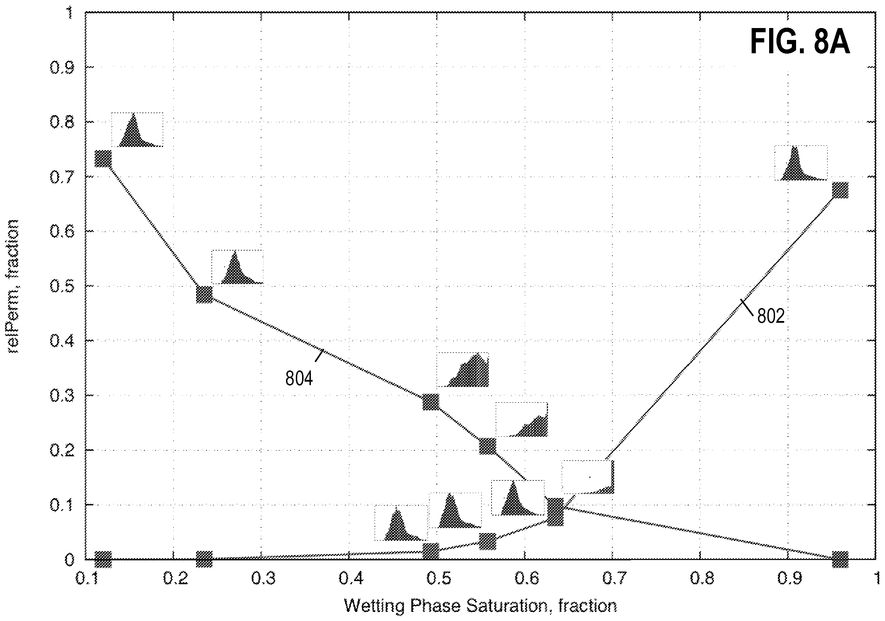

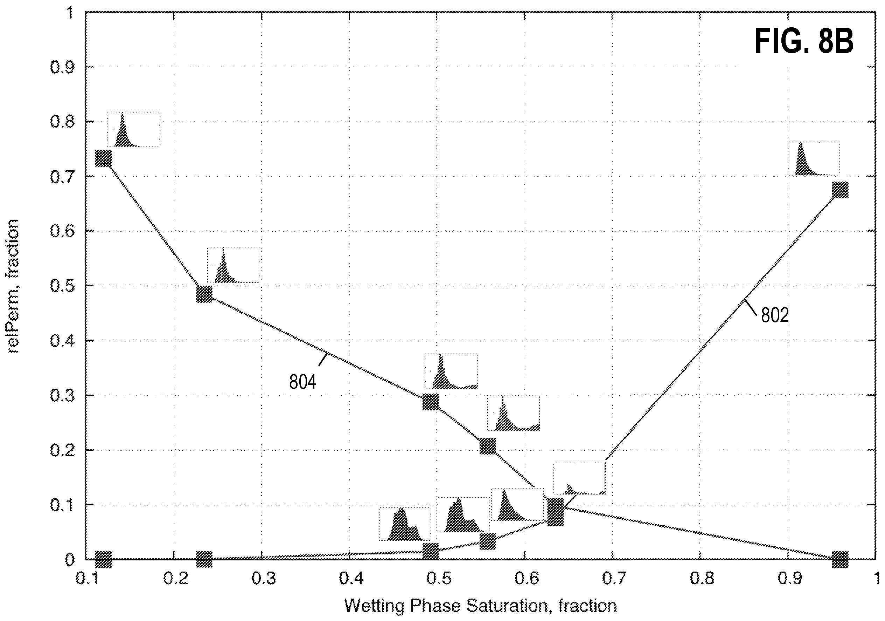

The carbonate rock sample that was used to determine the histograms in Figs. 5A-5B was subjected to this analysis, yielding the static relative permeability vs. saturation curves shown in Figs. 8A-8B. In both figures, curve 802 shows the quasi static relative permeability vs saturation for the wetting phase, while curve 804 shows the quasi static relative permeability vs saturation for the non-wetting phase. Insets in Fig. 8A show histograms of the standard deviation for subvolume porosity, while insets in Fig. 8B show histograms of the standard deviation for subvolume surface/volume ratio. The insets at high relative permeability values can be compared with Figs. 5A-5B to confirm that the distributions match when the pores are largely occupied by either single phase.

As the nonwetting phase saturation falls from near 1 to about 0.5 (shown in the figure as wetting saturation near 0 and 0.5, respectively), the histogram of standard deviation of porosity broadens and moves upward, indicating greatly increased heterogeneity. In other words, the network of porosity that the non-wetting fluid is forming for lower non-wetting saturation invades only parts of the pore space, and that leads to the heterogeneous distribution. The histogram of standard deviation of surface to volume ratio and porosity shows a growing peak at the right side of the graph for the non-wetting phase curve, probably indicating the presence of large heterogeneities.

As the wetting phase saturation falls from near 1 to about 0.5, the histogram of standard deviation of porosity for the wetting phase remain a consistent match to the original distribution. This observation suggests that as soon as the wetting phase is flowing, it can access almost any part of the pore space. The histogram of standard deviation for surface-to-volume ratio acquires additional peaks, revealing the increased heterogeneity from the reduced amount of wetting phase.

To perform a multiphase REV analysis, the histograms at multiple saturations and different length scales should be compared to the corresponding histograms of the original data volume to determine at which length scale there is the same rate of convergence of the moments of the distributions. The smallest data volume for which the histograms show an adequate match may be considered a representative elementary volume for multi-phase analyses. In other words, the length scale at which moments of the distribution for different saturations converge at the same rate corresponds to the multiphase REV.

Where the histograms are consistent across a wide saturation range (e.g., the wetting phase in this carbonate rock example), one can be reasonably confident that at the specific length scale the spreading of wetting and non-wetting phase is not dependent on the saturation level. Starting at that length scale, the convergence of the moments of the distribution can be compared for each saturation level at larger length scales to identify the multiphase REV size.

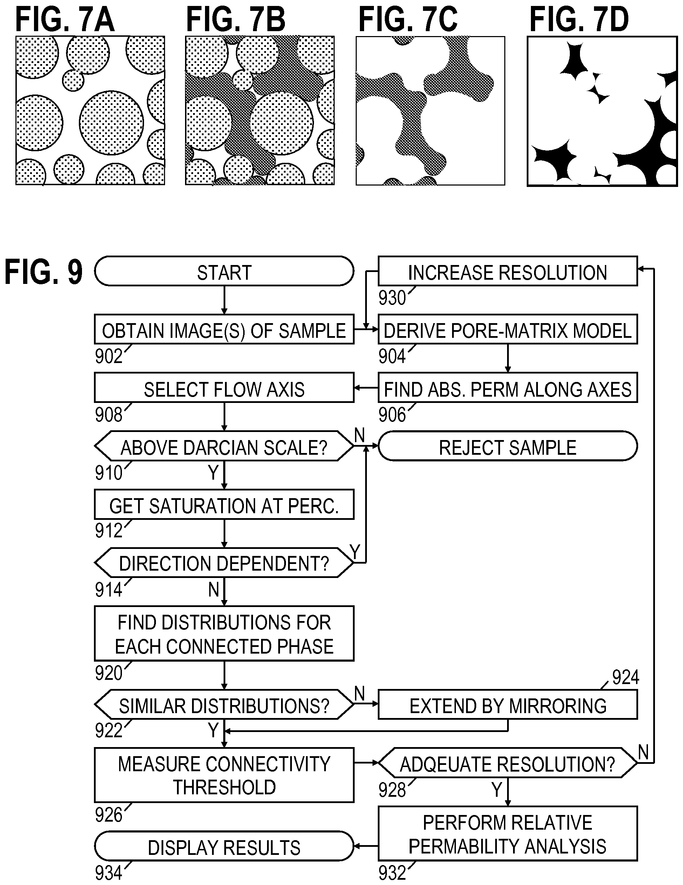

Figs. 9A-9B show the quasi-static relative permeability vs. saturation curves for a second carbonate rock example. In both figures, curve 902 represents the wetting phase and curve 904 represents the non-wetting phase. The insets in Fig. 9A show the histograms for the standard deviation of subvolume porosity, whereas the insets in Fig. 9B show the histograms for the standard deviation of subvolume surface-to-volume ratio. The available results suggest that the standard deviation distributions (of both porosity and Surface/Volume) have the same spreading and same mode for wetting and non-wetting phase, indicating basically that the two phases are going to distribute in a similar way throughout the porosity of the sample for each saturation level. A length scale dependence analysis can be started in order to define, as explained in U.S. Provisional Application 61/618,265 titled "An efficient method for selecting representative elementary volume in digital representations of porous media" a good REV.

In general, different fractional flows may require different simulation volumes: for small fractional flow of the non-wetting phase the REV dimension may increase. This is not expected for the wetting phase that, instead, invades the pore space in a more homogeneous way as soon as it starts to flow.

Fig. 7 is a flowchart that summarizes at least some of the method embodiments disclosed herein. Beginning in block 702, the system obtains one or more images of the sample, e.g., with focused ion beam microscopy. Of course the images can be alternatively supplied as data files on an information storage medium. In block 704, the system processes the images to derive a pore-matrix model. Such processing can involve sophisticated filtering as set forth in existing literature to classify each image voxel as representing a pore or a portion of the matrix. In block 706, the system analyzes the full pore-matrix model to obtain single phase statistics such as, e.g., porosity, surface-to-volume ratio, permeability, histograms of standard deviation of subvolume porosity and surface-to-volume ratio, and REV dimension.

In block 708, the system adds a second phase or increases the saturation of the second phase. As previously discussed, this can be done via a simulated injection, simulated drainage, or other simulated invasion process. In block 710, the system partitions the full pore-matrix model into phase-matrix models to segregate the pore space occupied by the different phases. In block 712, the phase-matrix models are subject to the same analyses as the full pore-matrix model, e.g., porosity, surface-to-volume ratio, permeability, histograms of standard deviation of subvolume porosity and surface-to-volume ratio as a function of subvolume length scale, and REV size.

In block 714, the system determines whether additional saturations need to be evaluated, and if so, blocks 708-714 are repeated. Once each desired saturation point has been evaluated, the system shows the statistics as a function of phase and saturation in block 716 to enable the user to determine an appropriate REV for multiphase calculations.

Numerous variations and modifications will become apparent to those skilled in the art once the above disclosure is fully appreciated. For example, the foregoing disclosure describes illustrative statistics for determining an REV size, but other suitable statistics exist and can be employed. It is intended that the following claims be interpreted to embrace all such variations and modifications.

**Claims**

1. A multiphase permeability determination method that comprises the following steps:

   i. obtaining a three-dimensional pore/matrix model of a sample (902) by scanning a physical rock sample to obtain a three-dimensional digital image; and deriving the pore/matrix model from the three-dimensional image; wherein the three-dimensional image is made up of three-dimensional volume elements each having a value indicative of the composition of the sample at that point;

   ii. determining a flow axis (908) wherein said determination is based on a standard deviation of porosity;

   iii. verifying that a dimension of the model along the flow axis exceeds a dimension of a representative elementary volume (REV) of the model (910), wherein the REV is determined using a standard deviation of porosity determined for each subvolume of the model;

   iv. selecting a flow direction along the flow axis of the model (912);

   v. extending the model by mirroring the model in an axial direction of the model (924) when pore statistics of the model at a given saturation of the model are mismatched for different percolating phases;

   vi. increasing the resolution (930) of the three-dimensional image of the sample and repeating the previous steps i-v when a dimension of a smallest nonpercolating sphere in determining a percolation threshold of the model (926) is below a predetermined threshold (328);

   vii. measuring relative permeability (932) using the model; and

   viii. displaying relative permeability measurements (934) to user.

2. The method of claim 1, further comprising: determining absolute permeability along each axis before said determining the flow axis.

3. The method of claim 1, wherein said selecting a flow direction includes:

   • examining opposing faces perpendicular to the flow axis to eliminate any face having large pores near a boundary; and
   • if two faces remain, selecting the face having better pore homogeniety as a preferred inlet face.

4. The method of claim 1, wherein said selecting a flow direction includes:

   • determining a MICP saturation at which connectivity occurs for each direction along said flow axis; and
   • verifying that a strong directional dependence does not exist.

5. The method of claim 1, wherein the predetermined threshold is a diameter of 3 voxels.

6. The method of claim 1, wherein said increasing the resolution includes repeating said obtaining, determining, verifying, selecting, extending, and increasing operations.

7. The method of claim 1, wherein said pore statistics include at least one of a distribution of standard deviation of porosity and a distribution of standard deviation of pore surface to volume ratio.

8. The method of claim 1, wherein the three-dimensional image is obtained by means of a beam of electrons or ions rastered across the sample's surface to obtain a high resolution image, increasing ion beam energy mill away thin layers of the sample enabling sample images to be taken at multiple depths.

9. A multiphase permeability determination system that comprises a memory having software; and one or more processors coupled to the memory to execute the software, the software causing the one or more processors to carry out the method of any one of claims 1 to 8.

**Patentansprüche**

1. Verfahren zur mehrphasigen Permeabilitätsbestimmung, das die folgenden Schritte umfasst:

i) Erhalten eines dreidimensionalen Poren/Matrix-Modells einer Probe (902) durch ein Scannen einer physikalischen Gesteinsprobe, um ein dreidimensionales digitales Bild zu erhalten; und Ableiten des Poren/Matrix-Modells von dem dreidimensionalen Bild; wobei das dreidimensionale Bild aus dreidimensionalen Volumenelementen besteht, die jeweils einen Wert aufweisen, der die Zusammensetzung der Probe an dieser Stelle anzeigt;
ii) Bestimmen einer Strömungsachse (908), wobei die Bestimmung auf einer Standardabweichung der Porosität basiert;
iii) Verifizieren, dass eine Dimensionierung des Modells entlang der Strömungsachse eine Dimensionierung eines repräsentativen Elementarvolumens (REV) des Modells (910) übersteigt, wobei das REV unter Verwendung einer Standardabweichung der Porosität bestimmt wird, die für jedes Teilvolumen des Modells bestimmt wird;
iv) Auswählen einer Strömungsrichtung entlang der Strömungsachse des Modells (912);
v) Erweitern des Modells durch ein Spiegeln des Modells in eine axiale Richtung des Modells (924), wenn eine Porenstatistik des Modells bei einer gegebenen Sättigung des Modells bei verschiedenen Perkolierungsphasen nicht übereinstimmt;
vi) Erhöhen der Auflösung (930) des dreidimensionalen Bilds der Probe und Wiederholen der vorhergehenden Schritte i–v, wenn eine Dimensionierung einer kleinsten nichtperkolierenden Kugel beim Bestimmen eines Perkolationsschwellenwerts des Modells (926) unterhalb eines vorbestimmten Schwellenwerts (328) liegt;
vii) Messen einer relativen Permeabilität (932) unter Verwendung des Modells; und
viii) Anzeigen von Messwerten (934) einer relativen Permeabilität an einen Benutzer.

2. Verfahren nach Anspruch 1, ferner umfassend: Bestimmen einer absoluten Permeabilität entlang jeder Achse vor dem Bestimmen der Strömungsachse.

3. Verfahren nach Anspruch 1, wobei das Auswählen einer Strömungsrichtung Folgendes einschließt:

• Untersuchen von gegenüberliegenden Flächen, die senkrecht zu der Strömungsachse sind, um jegliche Fläche, die nahe einer Grenze große Poren aufweist, zu eliminieren; und
• falls zwei Flächen übrigbleiben, Auswählen der Fläche als eine bevorzugte Einlassfläche, die eine bessere Porenhomogenität aufweist.

4. Verfahren nach Anspruch 1, wobei das Auswählen einer Strömungsrichtung Folgendes einschließt:

• Bestimmen einer MICP-Sättigung, bei der eine Konnektivität für jede Richtung entlang der Strömungsachse auftritt; und
• Verifizieren, dass keine starke Richtungsabhängigkeit existiert.

5. Verfahren nach Anspruch 1, wobei der vorbestimmte Schwellenwert ein Durchmesser von 3 Voxeln ist.

6. Verfahren nach Anspruch 1, wobei das Erhöhen der Auflösung ein Wiederholen der Vorgänge des Erhaltens, Bestimmens, Verifizierens, Auswählens, Erweiterns und Erhöhens einschließt.

7. Verfahren nach Anspruch 1, wobei die Porenstatistik mindestens eines einschließt von einer Verteilung der Standardabweichung der Porosität und einer Verteilung einer Standardabweichung eines Porenoberfläche-Volumen-Verhältnisses.

8. Verfahren nach Anspruch 1, wobei das dreidimensionale Bild mittels eines Elektronen- oder eines Ionenstrahls erhalten wird, der über die Oberfläche der Probe gerastert wird, um ein hochauflösendes Bild zu erhalten, wobei ein Erhöhen einer Ionenstrahlenergie dünne Schichten der Probe weg fräst und es ermöglicht, Probenbilder bei mehreren Tiefen aufzunehmen.

**9.** System zur mehrphasigen Permeabilitätsbestimmung, das einen Speicher umfasst, der eine Software aufweist; und wobei ein oder mehrere Prozessoren an den Speicher gekoppelt sind, um die Software auszuführen, wobei die Software den einen oder die mehreren Prozessoren dazu veranlasst, das Verfahren nach einem der Ansprüche 1 bis 8 durchzuführen.

**Revendications**

**1.** Procédé de détermination de perméabilité polyphasique comprenant les étapes suivantes :

> i. l'obtention d'un modèle de pore/matrice tridimensionnel d'un échantillon (902) par le balayage d'un échantillon de roche physique pour obtenir une image numérique tridimensionnelle ; et la dérivation du modèle de pore/matrice à partir de l'image tridimensionnelle ; dans lequel l'image tridimensionnelle est constituée d'éléments de volume tridimensionnels présentant chacun une valeur indiquant la composition de l'échantillon à ce point ;
> ii. la détermination d'un axe d'écoulement (908), dans lequel ladite détermination est basée sur un écart-type de porosité ;
> iii. la vérification qu'une dimension du modèle le long de l'axe d'écoulement excède une dimension d'un volume élémentaire représentatif (REV) du modèle (910), dans lequel le REV est déterminé à l'aide d'un écart-type de porosité déterminé pour chaque sous-volume du modèle ;
> iv. la sélection d'une direction d'écoulement le long de l'axe d'écoulement du modèle (912) ;
> v. l'extension du modèle par le reflet du modèle dans une direction axiale du modèle (924) lorsque des statistiques de pore du modèle à une saturation donnée du modèle ne sont pas en concordance pour différentes phases de percolation ;
> vi. l'augmentation de la résolution (930) de l'image tridimensionnelle de l'échantillon et la répétition des étapes précédentes i à v lorsqu'une dimension d'une sphère non percolante la plus petite dans la détermination d'un seuil de percolation du modèle (926) est en dessous d'un seuil prédéterminé (328) ;
> vii. la mesure de la perméabilité relative (932) à l'aide du modèle ; et
> viii. l'affichage des mesures de perméabilité relative (934) à l'attention de l'utilisateur.

**2.** Procédé selon la revendication 1, comprenant en outre : la détermination de la perméabilité absolue le long de chaque axe avant ladite détermination de l'axe d'écoulement.

**3.** Procédé selon la revendication 1, dans lequel ladite sélection d'une direction d'écoulement inclut :

> • l'examen de faces opposées perpendiculaires à l'axe d'écoulement pour éliminer toute face présentant de grands pores près d'une limite ; et
> • si deux faces restent, la sélection de la face présentant une meilleure homogénéité des pores en tant que face d'entrée préférée.

**4.** Procédé selon la revendication 1, dans lequel ladite sélection d'une direction d'écoulement inclut :

> • la détermination d'une saturation de MICP à laquelle la connectivité intervient pour chaque direction le long dudit axe d'écoulement ;
> • la vérification qu'aucune dépendance directionnelle forte n'existe.

**5.** Procédé selon la revendication 1, dans lequel le seuil prédéterminé est un diamètre de 3 voxels.

**6.** Procédé selon la revendication 1, dans lequel ladite augmentation de la résolution inclut la répétition desdites opérations d'obtention, de détermination, de vérification, de sélection, d'extension et d'augmentation.

**7.** Procédé selon la revendication 1, dans lequel lesdites statistiques de pore incluent au moins l'une d'une distribution d'écart-type de porosité et d'une distribution de rapport entre l'écart-type de surface de pore et le volume.

**8.** Procédé selon la revendication 1, dans lequel l'image tridimensionnelle est obtenue au moyen d'un faisceau d'électrons ou d'ions tramés à travers la surface de l'échantillon pour obtenir une image à haute résolution, augmentant les couches fines de retrait par meulage de l'énergie de faisceaux d'ions de l'échantillon permettant la prise d'images d'échantillon à des profondeurs multiples.

**9.** Système de détermination de perméabilité polyphasique comprenant une mémoire présentant un logiciel ; et un ou plusieurs processeurs couplés à la mémoire pour exécuter le logiciel, le logiciel amenant les un ou plusieurs processeurs à exécuter le procédé selon l'une quelconque des revendications 1 à 8.

FIG. 1

FIG. 2

**FIG. 3A**

**FIG. 3B**

302

X

406

Z

404

408

402

Y

X

Z

**FIG. 4**

502

Y

**FIG. 5A**

HISTOGRAM
(PEAK NORMALIZED TO 1)

1.0

0.8

0.6

0.4

0.2

0.0

0.0   0.2   0.4   0.6   0.8   1.0

STD OF POROSITY FOR SUBVOL.

**FIG. 5B**

HISTOGRAM
(PEAK NORMALIZED TO 1)

1.0

0.8

0.6

0.4

0.2

0.0

0.0   0.2   0.4   0.6   0.8   1.0

STD OF SURFACE/VOLUME RATIO

## FIG. 6

**FIG. 7A**

**FIG. 7B**

**FIG. 7C**

**FIG. 7D**

**FIG. 9**

START

OBTAIN IMAGE(S) OF SAMPLE
902

SELECT FLOW AXIS
908

ABOVE DARCIAN SCALE? — N
910   Y

GET SATURATION AT PERC.
912

DIRECTION DEPENDENT? — Y
914   N

FIND DISTRIBUTIONS FOR EACH CONNECTED PHASE
920

SIMILAR DISTRIBUTIONS? — N
922   Y

MEASURE CONNECTIVITY THRESHOLD
926

DISPLAY RESULTS
934

INCREASE RESOLUTION
930

DERIVE PORE-MATRIX MODEL
904

FIND ABS. PERM ALONG AXES
906

REJECT SAMPLE

EXTEND BY MIRRORING
924

ADQEUATE RESOLUTION? — N
928   Y

PERFORM RELATIVE PERMABILITY ANALYSIS
932

FIG. 8A

FIG. 8B

EP 2 872 741 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 52475812 A
- US 2011004447 A
- US 6516080 B1
- US 2012179436 A
- WO 2013188239 A
- US 61618265 A

### Non-patent literature cited in the description

- **HILPERT ; MILLER.** Pore-morphology-based simulation of drainage in totally wetting porous media. *Advances in Water Resources,* 2001, vol. 24, 243-255
- **PAPATZACOS.** Cellular Automation Model for Fluid Flow in Porous Media. *Complex Systems,* 1989, vol. 3, 383-405